# FASCICULE DE BREVET EUROPEEN

(11) **EP 3 908 501 B1**
(45) Date de publication et mention de la délivrance du brevet: **25.01.2023**
(21) Numéro de dépôt: 19839395.1
(22) Date de dépôt: 12.12.2019
(51) Int. Cl.: B62D 29/00, B62D 25/00

(54) **SYSTÈME DE FIXATION D'UNE PLAQUE D'ÉTANCHÉITÉ SUR UN LOGEMENT DE FEU ARRIÈRE DE VÉHICULE AUTOMOBILE**
SYSTEM ZUR BEFESTIGUNG EINER DICHTUNGSPLATTE AN EINER RÜCKLICHTAUSSPARUNG EINES KRAFTFAHRZEUGS
SYSTEM FOR ATTACHING A SEALING PLATE TO A TAIL LIGHT RECESS OF A MOTOR VEHICLE

(30) Priorité: 09.01.2019 FR 1900176
(43) Date de publication de la demande: 17.11.2021
(73) Titulaire: PSA Automobiles SA, 78300 Poissy (FR)
(72) Inventeur: RIVIERRE, Laurent, 75015 PARIS (FR)
(86) Numéro de dépôt international: PCT/FR2019/053030
(87) Numéro de publication internationale: WO 2020/144415

(56) Documents cités:
- FR-A1- 2 918 014
- FR-A1- 2 922 182

## Description

La présente invention revendique la priorité de la demande française 1900176 déposée le 09 Janvier 2019.

Le contexte technique de la présente invention est celui des feux arrière de véhicule automobile, et notamment à l'assemblage d'un logement de feu arrière sur un tel véhicule automobile. Plus particulièrement, l'invention a trait à un système de fixation d'une plaque d'étanchéité à insert gonflant sur un logement de feu arrière d'un véhicule automobile, ainsi qu'à une structure de support et d'étanchéité d'un logement de feu arrière de véhicule automobile.

Dans l'état de la technique, on connaît le document FR2918014A1 qui décrit une structure de support et d'étanchéité d'un logement de feu arrière, la structure comprenant une plaque d'étanchéité à insert gonflant qui est fixée sur le logement de feu arrière correspondant par l'intermédiaire de deux clips de fixation collaborant avec une partie de fixation dudit logement de feu arrière. Un inconvénient connu de ce système de fixation de la plaque d'étanchéité à insert gonflant sur le logement de feu arrière est que, lorsque l'insert gonflant est expansé, il arrive qu'une position relative de la plaque d'étanchéité à insert gonflant bouge - notamment au travers d'un mouvement de rotation autour de ses clips de fixation - par rapport au logement de feu arrière. Consécutivement, il apparait une perte d'efficacité sur la fonction d'étanchéification recherchée lors de la mise en place de la plaque d'étanchéité à insert gonflant.

La présente invention a pour objet de proposer un nouveau système de fixation de la plaque d'étanchéité à insert gonflant sur le logement de feu arrière afin de répondre au moins en grande partie aux problèmes précédents et de conduire en outre à d'autres avantages.

Un autre but de l'invention est de permettre de maintenir en position la plaque d'étanchéité à insert gonflant sur le logement de feu arrière lors de son assemblage.

Un autre but de l'invention est d'empêcher un mouvement relatif - et notamment un mouvement de rotation - de la plaque d'étanchéité à insert gonflant par rapport au logement de feu arrière.

Un autre but de l'invention est d'améliore l'étanchéité entre le logement de feu arrière et le coffre d'un véhicule automobile.

Selon un premier aspect de l'invention, on atteint au moins l'un des objectifs précités avec un système de fixation d'une plaque d'étanchéité à insert gonflant sur un logement de feu arrière d'un véhicule automobile, le système de fixation comprenant (i) deux orifices formés sur une face d'appui du logement de feu arrière, chaque orifice étant destiné à collaborer avec un clip de fixation formé sur la plaque d'étanchéité à insert gonflant, et (ii) une fourchette formée sur une face latérale du logement de feu arrière afin de maintenir latéralement la plaque d'étanchéité à insert gonflant par rapport au logement de feu arrière.

Le système de fixation conforme au premier aspect de l'invention est formé sur le logement de feu arrière.

La face d'appui du logement de feu arrière est destinée à recevoir une fixation dudit feu arrière.

La face latérale du logement de feu arrière est située du côté de l'habitacle du véhicule automobile.

La fourchette formée sur la face latérale du logement de feu arrière forme ainsi un dispositif anti-rotation de la plaque d'étanchéité à insert gonflant par rapport au logement de feu arrière : lorsque l'insert gonflant s'expanse, la fourchette du système de fixation retient la plaque d'étanchéité à insert gonflant et l'empêche de pivoter latéralement par rapport au logement de feu arrière. En outre la fourchette permet aussi de maintenir en position la plaque d'étanchéité à insert gonflant par rapport au logement de feu arrière lors de son montage.

Ainsi, le système de fixation conforme au premier aspect de l'invention propose un dispositif à trois points - les deux orifices du logement de feu arrière collaborant avec les clips correspondant de la plaque d'étanchéité à insert gonflant - pour positionner la plaque d'étanchéité à insert gonflant par rapport au logement de feu arrière. Dans le système de fixation conforme au premier aspect de l'invention, les orifices du logement de feu arrière et les clips correspondants de la plaque d'étanchéité à insert gonflant forment chacun un organe de fixation de la plaque d'étanchéité à insert gonflant sur le logement de feu arrière, tandis que la fourchette formée sur le logement de feu arrière n'est pas - en tant que tel - un organe de fixation : elle réalise avec la plaque d'étanchéité à insert gonflant un assemblage partiel. En effet, comme il sera décrit ultérieurement, la fourchette est insérée sans verrouillage dans la plaque d'étanchéité à insert gonflant.

Le système de fixation conforme au premier aspect de l'invention comprend avantageusement au moins un des perfectionnements ci-dessous, les caractéristiques techniques formant ces perfectionnements pouvant être prises seules ou en combinaison :
- la face d'appui du logement de feu arrière comprend une lumière centrale pour l'insertion et/ou la fixation d'un dispositif d'éclairage, les deux orifices étant formées d'un premier côté par rapport à la lumière centrale, et la fourchette étant située au niveau d'un deuxième côté par rapport à ladite lumière centrale, relativement à une direction sensiblement parallèle à la face latérale du logement de feu arrière. En particulier, la fourchette est préférentiellement située « à distance » des deux orifices : une distance séparant la fourchette de chacun des orifices étant avantageusement supérieure à une distance séparant les deux orifices. Cette configuration avantageuse permet ainsi d'améliorer le blocage en rotation de la plaque d'étanchéité à insert gonflant par rapport au logement de feu arrière et, d'une manière plus générale, d'empêcher tout mouvement latéral entre eux ;
- la face latérale du logement de feu arrière sur laquelle est formée la fourchette s'étend de manière sensiblement perpendiculaire par rapport à la face d'appui du logement de feu arrière. La face latérale du logement de feu arrière forme un bord replié dudit logement de feu arrière. Cette configuration avantageuse permet d'une part de faciliter la mise en position de la plaque d'étanchéité à insert gonflant sur le logement de feu arrière et, d'autre part d'améliorer le maintien de la plaque d'étanchéité à insert gonflant sur le logement de feu arrière ;
- la fourchette du système de fixation est située à une extrémité longitudinale de la face latérale du logement de feu arrière ;
- la fourchette du système de fixation comprend une encoche qui s'étend depuis un bord libre de la face latérale et en direction du logement de feu arrière, ladite encoche étant délimitée par un ergot de positionnement de la plaque d'étanchéité à insert gonflant, ledit ergot formant l'extrémité longitudinale de la face latérale. Cette configuration avantageuse permet d'insérer par glissement la fourchette dans une partie en regard de la plaque d'étanchéité à insert gonflant ;
- l'ergot délimitant l'encoche de la fourchette comprend (i) un premier bord rectiligne formant l'encoche, et (ii) un deuxième bord formant un cran du côté de l'extrémité longitudinale de la face latérale afin de maintenir en position la plaque d'étanchéité à insert gonflant par rapport au logement de feu arrière. Cette configuration avantageuse permet d'empêcher la plaque d'étanchéité à insert gonflant de ressortir de la fourchette de manière incontrôlée.

Selon un deuxième aspect de l'invention, il est proposé une structure de support et d'étanchéité d'un logement de feu arrière de véhicule automobile, la structure comprenant (i) une pièce formant côté d'habitacle d'aile arrière, (ii) une pièce de fermeture inférieure d'aile arrière, (iii) un logement de feu arrière fixé simultanément sur la pièce formant côté d'habitacle et sur la pièce de fermeture, (iv) une plaque d'étanchéité à insert gonflant configurée pour cloisonner un interstice formé entre le logement de feu arrière d'une part et, d'autre part, la pièce formant côté d'habitacle et la pièce de fermeture, la plaque d'étanchéité à insert gonflant étant fixée solidairement au logement de feu arrière par un système de fixation conforme au premier aspect de l'invention ou selon l'un quelconque de ses perfectionnements.

Dans la structure de support et d'étanchéité conforme au deuxième aspect de l'invention, la plaque d'étanchéité à insert gonflant permet d'isoler complètement la zone de coffre du véhicule automobile par rapport à la zone de logement du feu arrière.

Ainsi, la structure de support et d'étanchéité conforme au deuxième aspect de l'invention propose une étanchéification - par l'intermédiaire de la plaque d'étanchéité à insert gonflant - qui est fixée solidairement au logement de feu arrière de manière astucieuse et plus performante que les systèmes de fixation connu auparavant : la plaque d'étanchéité à insert gonflant est exclusivement fixée sur le logement de feu arrière, et non pas sur la pièce formant côté d'habitacle d'aile arrière et/ou sur la pièce de fermeture inférieure d'aile arrière, bien qu'elle en assure l'étanchéité in fine. En outre, comme décrit précédemment en référence au premier aspect de l'invention, la fixation de la plaque d'étanchéité à insert gonflant sur le logement de feu arrière est plus performante car elle garantit son maintien en position lorsque l'insert gonflant s'expanse pour étanchéifier cet assemblage de pièces.

La structure de support et d'étanchéité conforme au deuxième aspect de l'invention comprend avantageusement au moins un des perfectionnements ci-dessous, les caractéristiques techniques formant ces perfectionnements pouvant être prises seules ou en combinaison :
- la plaque d'étanchéité à insert gonflant comprend une rainure dans laquelle la fourchette du système de fixation est engagée. Cette configuration avantageuse permet ainsi d'empêcher un mouvement latéral et/ou un mouvement de rotation de la plaque d'étanchéité à insert gonflant par rapport au logement de feu arrière ;
- la plaque d'étanchéité à insert gonflant comprend une bride de maintien en position configurée pour collaborer avec l'ergot de la fourchette du système de fixation. Cette configuration avantageuse permet ainsi de faciliter le montage et le maintien en position de la plaque d'étanchéité à insert gonflant sur le logement de feu arrière.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue schématique arrière d'un véhicule automobile ;
[Fig.2] illustre une vue en perspective arrière d'un logement de feu arrière de véhicule automobile comprenant un système de fixation conforme au premier aspect de l'invention ;
[Fig.3] illustre une vue en perspective arrière du logement de feu arrière illustré sur la figure 2 et associé à une plaque d'étanchéité à insert gonflant ;
[Fig.4] illustre une vue en perspective avant du logement de feu arrière illustré sur la figure 2 et associé à la plaque d'étanchéité à insert gonflant ;
[Fig.5] illustre une vue en perspective d'un du système de fixation conforme au premier aspect de l'invention permettant de fixer solidairement la plaque d'étanchéité à insert gonflant sur le logement de feu arrière.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

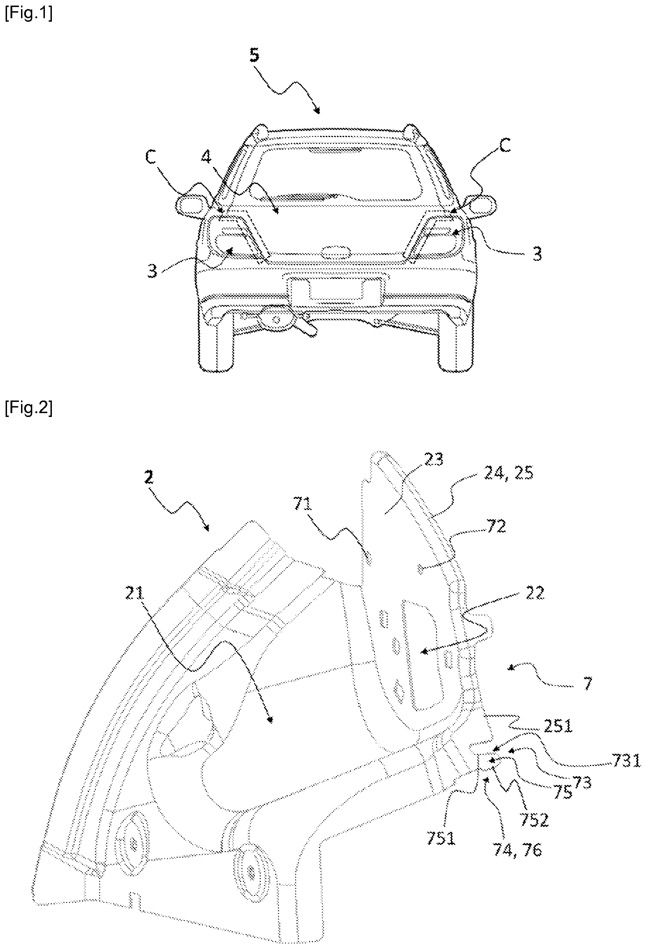

En référence à la figure 1, un véhicule automobile 5 est illustré. Le véhicule automobile 5 comprend deux feux arrière 3 situés latéralement de part et d'autre d'un coffre 4 dudit véhicule automobile 5. Comme décrit précédemment, la présente invention a pour objet d'améliorer l'étanchéité au niveau d'une zone intermédiaire située entre l'un des feux arrière 3 et le coffre 4 du véhicule automobile 5 et représentée par un contour C en traits pointillés sur la figure 1. Plus particulièrement, l'invention conforme à son premier aspect vise à améliorer l'étanchéité entre un logement de feu arrière 2 et une gouttière d'aile arrière de véhicule automobile 5, non visible sur les figures décrites ci-après.

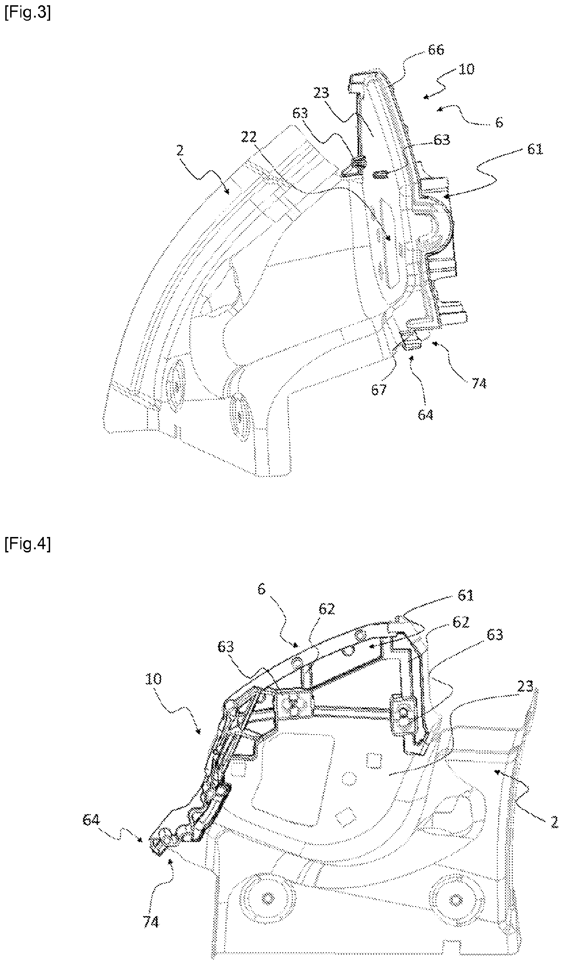

Une telle étanchéité est assurée par la fixation d'une plaque d'étanchéité à insert gonflant 6 sur le logement de feu arrière 2 correspondant. La fixation de la plaque d'étanchéité à insert gonflant 6 sur le logement de feu arrière 2 sera décrit ultérieurement en référence aux figures 3 à 5.

En référence à la figure 2, le logement de feu arrière 2 prend la forme d'une tôle pliée de forme complexe afin de permettre à la fois de fixer solidairement un dispositif d'éclairage - tel que par exemple le feu arrière et/ou un dispositif de signalisation - sur ledit logement de feu arrière 2 et de fixer solidairement le logement de feu arrière 2 sur une structure du véhicule automobile 5. Le logement de feu arrière comprend ainsi une partie concave 21 permettant d'accueillir le dispositif d'éclairage. Le dispositif d'éclairage est alors destiné à être mis en appui contre une face d'appui 23 du logement de feu arrière 2. Le logement de feu arrière 2 comprend aussi une lumière centrale 22 pour l'insertion et/ou la fixation d'un dispositif d'éclairage, ainsi que pour permettre au dispositif d'éclairage d'émettre un signal lumineux visible depuis l'arrière du véhicule automobile 5.

Conformément à l'invention selon son premier aspect, et afin de permettre la fixation de la plaque d'étanchéité à insert gonflant 6, le logement de feu arrière 2 comprend un système de fixation 7 comprenant deux orifices 71, 72 formés sur la face d'appui 23 du logement de feu arrière 2 et une fourchette 73 formée sur une face latérale 25 du logement de feu arrière 2. Dans l'invention conforme à son premier aspect, le système de fixation est une partie intégrante du logement de feu arrière 2.

Chaque orifice 71, 72 du système de fixation 7 est destiné à collaborer avec un clip de fixation formé sur la plaque d'étanchéité à insert gonflant 6, non visible sur la figure 2.

La face latérale 25 du logement de feu arrière 2 est formée par un bord plié 24 qui s'étend le long de la face d'appui 23 du logement de feu arrière 2. La face latérale 25 s'étend ainsi perpendiculairement par rapport à la face d'appui 23 du logement de feu arrière 2.

Comme visible sur la figure 2, la fourchette 73 est formée au niveau d'une extrémité longitudinale 74, à distance des orifices 71, 72. Cette configuration avantageuse permet, au niveau de la fourchette 73, de maintenir latéralement la plaque d'étanchéité à insert gonflant 6 par rapport au logement de feu arrière 2 et d'éviter tout mouvement relatif entre elles. Plus particulièrement, les orifices 71, 72 du système de fixation 7 sont formées sur la face d'appui 23 et d'un premier côté par rapport à la lumière centrale 22, tandis que la fourchette 73 est située au niveau d'un deuxième côté par rapport à ladite lumière centrale 22. Ainsi, les orifices 71, 72 et la fourchette 73 forment collectivement un système de fixation à trois points de fixation, contribuant ainsi à faciliter la mise en position de la plaque d'étanchéité à insert gonflant 6 sur le logement de feu arrière 2 et à limiter voire empêcher tout mouvement relatif entre eux.

Afin de faciliter la mise en position de la plaque d'étanchéité à insert gonflant 6 sur le logement de feu arrière 2, la fourchette 73 du système de fixation 7 s'étend en saillie par rapport à la face d'appui 23 du logement de feu arrière 2, de manière sensiblement perpendiculaire.

Comme visible sur la figure 2, la fourchette 73 du système de fixation 7 comprend une encoche 731 qui s'étend depuis un bord libre 251 de la face latérale 25 du logement de feu arrière 2 et en direction de la face d'appui 23. L'encoche 731 a une forme générale « en U » : dans la direction longitudinale de la face latérale 25, elle est délimitée par deux bords rectilignes et sensiblement parallèle entre eux. Eventuellement, les deux bords rectilignes délimitant l'encoche 731 ne sont pas parallèle entre eux et il existe un angle strictement supérieur à 0° entre eux.

Au niveau d'une partie proximale de l'encoche 731 par rapport à l'extrémité longitudinale 74 de la face latérale 25, l'encoche 731 est délimitée par un ergot 75 qui permet de faciliter le positionnement de la plaque d'étanchéité à insert gonflant 6. L'ergot 75 forme avantageusement l'extrémité longitudinale 74 de la face latérale 25. Plus particulièrement, l'ergot 75 comprend un premier bord rectiligne 751 formant l'encoche 731 et un deuxième bord 752 formant un cran 76 du côté de l'extrémité longitudinale 74 de la face latérale 25, afin de maintenir en position la plaque d'étanchéité à insert gonflant 6 par rapport au logement de feu arrière 2, comme il va maintenant être décrit en référence aux figures 3 à 5.

Les figures 3 à 5 illustrent plusieurs vues isométriques, sous plusieurs points de vue, d'une structure de support et d'étanchéité 10 d'un logement de feu arrière 2 de véhicule automobile 5, la structure 10 comprenant :
- une pièce formant côté d'habitacle d'aile arrière du véhicule automobile et une pièce de fermeture inférieure d'aile arrière dudit véhicule automobile, non représentées sur les figures 3 à 5 ;
- un logement de feu arrière 2 fixé simultanément sur la pièce formant côté d'habitacle et sur la pièce de fermeture ;
- une plaque d'étanchéité à insert gonflant 6 configurée pour cloisonner un interstice formé entre le logement de feu arrière 2 d'une part et, d'autre part, la pièce formant côté d'habitacle et la pièce de fermeture.

La plaque d'étanchéité à insert gonflant 6 est fixée solidairement sur le logement de feu arrière 2 par un système de fixation 7 conforme au premier aspect de l'invention et tel que décrit précédemment en référence à la figure 2.

La plaque d'étanchéité à insert gonflant 6 comprend une structure 61 à vertèbres 62 qui collabore avec la face d'appui 23 et la face latérale 25 du logement de feu arrière 2. La structure 61 à vertèbres 62 est réalisé dans un premier matériau rigide, tel que par exemple du plastique. En outre, la plaque d'étanchéité à insert gonflant 6 comprend insert gonflant réalisé dans un deuxième matériau extensible. L'insert gonflant est logé à l'intérieur de la structure 61 à vertèbres 62 et permet de garantir l'étanchéité entre le logement de feu arrière 2, la plaque d'étanchéité à insert gonflant 6 et les pièces formant côté d'habitacle d'aile arrière et de fermeture inférieure d'aile arrière du véhicule automobile 5.

Lorsque la plaque d'étanchéité à insert gonflant 6 est mise en position sur le logement de feu arrière 2, l'insert gonflant est dans un premier état et occupe un premier volume dans la structure 61 à vertèbres 62. Cette configuration permet de faciliter la mise en position et la fixation de la plaque d'étanchéité à insert gonflant 6 sur le logement de feu arrière 2. La fixation de la plaque d'étanchéité à insert gonflant 6 sur le logement de feu arrière 2 est assuré par deux clips de fixation 63 collaborant avec les deux orifices 71, 72 situés au-dessus de la lumière centrale 22 de la face d'appui 23 du logement de feu arrière 2. En particulier, les clips de fixation 63 de la plaque d'étanchéité à insert gonflant 6 sont engagés dans les orifices 71, 72 du logement de feu arrière 2 par collaboration de formes complémentaires, par exemple par encliquetage.

Cependant, cette mise en position et/ou fixation de la plaque d'étanchéité à insert gonflant 6 sur le logement de feu arrière 2 ne permet pas en tant que tel de garantir un résultat optimal. En effet, la collaboration entre les clips de fixation 63 et les orifices 71, 72 du logement de feu arrière 2 ne permet pas d'empêcher un mouvement relatif entre la plaque d'étanchéité à insert gonflant 6 et le logement de feu arrière 2 lorsque l'insert gonflant s'étend. En particulier, on a pu constater un mouvement de rotation et/ou un décalage latéral de la plaque d'étanchéité à insert gonflant 6 par rapport au logement de feu arrière 2, au niveau de l'extrémité longitudinale 74 de la face latérale 25.

Conformément à l'invention, ce problème technique est avantageusement résolu par la présence de la fourchette 73 du système de fixation 7 du logement de feu arrière 2, ladite fourchette 73 collaborant avec une partie terminale 64 de la plaque d'étanchéité à insert gonflant 6.

Comme visible sur la figure 3, la plaque d'étanchéité à insert gonflant 6 comprend une rainure 66 dans laquelle tout ou partie de la face latérale 25 du logement de feu arrière 2 est engagée. Cette configuration avantageuse permet ainsi de faciliter la mise en position de la plaque d'étanchéité à insert gonflant 6 sur le logement de feu arrière 2 en guidant le positionnement latéral de ladite plaque d'étanchéité à insert gonflant 6 sur ledit logement de feu arrière 2.

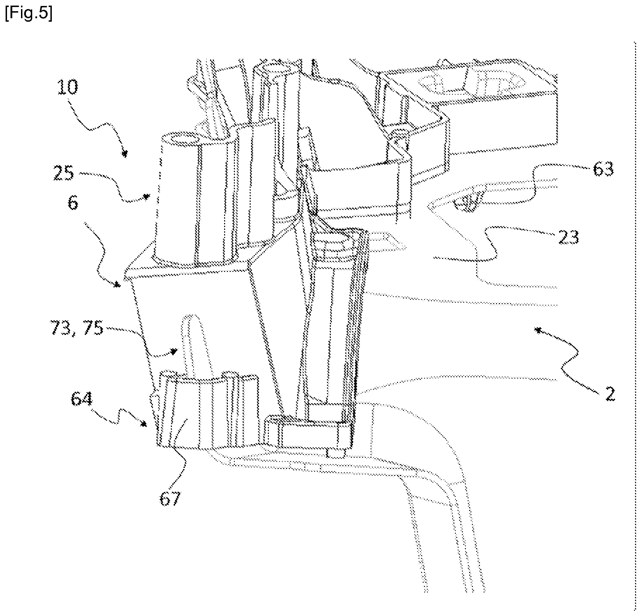

La figure 5 illustre une vue isométrique de détail de la fourchette 73 du système de fixation 7 formé sur le logement de feu arrière 2 et collaborant avec la partie terminale 64 de la plaque d'étanchéité à insert gonflant 6. La rainure 66 de la plaque d'étanchéité à insert gonflant 6 permet aussi d'engager la fourchette 73 du système de fixation 7 du logement de feu arrière au niveau de l'extrémité longitudinale 74 de la face latérale 25 du logement de feu arrière 2. Cette configuration avantageuse permet ainsi de faciliter la mise en position de la plaque d'étanchéité à insert gonflant 6 sur le logement de feu arrière 2 en guidant le positionnement latéral de ladite plaque d'étanchéité à insert gonflant 6 sur ledit logement de feu arrière 2. En outre, cette configuration permet avantageusement d'empêcher un mouvement latéral et/ou un mouvement de rotation de la plaque d'étanchéité à insert gonflant par rapport au logement de feu arrière.

Comme visible sur les figures 3 à 5, la plaque d'étanchéité à insert gonflant 6 comprend, au niveau de sa partie terminale 64, une bride 67 de maintien en position de la plaque d'étanchéité à insert gonflant 6 sur le logement de feu arrière 2. La bride de maintien est configurée pour collaborer avec l'ergot 75 de la fourchette 73 du système de fixation 7. Cette configuration avantageuse permet ainsi de faciliter le montage et le maintien en position de la plaque d'étanchéité à insert gonflant sur le logement de feu arrière. La bride 67 fait le tour de l'ergot 75 de la fourchette 73 du système de fixation 7 afin de brider la plaque d'étanchéité à insert gonflant 6 sur le logement de feu arrière 2. La bride 67 de la plaque d'étanchéité à insert gonflant 6, ainsi que la fourchette 73 et l'ergot 75 du système de fixation 7 collaborent ensemble pour maintenir en position. Cependant, la bride 67 de la plaque d'étanchéité à insert gonflant 6, ainsi que la fourchette 73 et l'ergot 75 du système de fixation 7 ne forment pas en tant que tel un dispositif de fixation de la plaque d'étanchéité à insert gonflant 6 sur le logement de feu arrière 2 : le couplage mécanique entre la bride 67 de la plaque d'étanchéité à insert gonflant 6 d'une part, et d'autre part la fourchette 73 et l'ergot 75 du système de fixation 7 est avantageusement du type d'une liaison imparfaite : il subsiste, au niveau de la fourchette et/ou de l'ergot du système de fixation 7, au moins un degré de liberté résiduel entre la plaque d'étanchéité à insert gonflant 6 et le logement de feu arrière 2, avantageusement d'une type d'une translation.

En synthèse, l'invention concerne un système de fixation 7 d'un logement de feu arrière 2, le système de fixation permettant de maintenir en position et/ou de réduire un débattement latéral de la plaque d'étanchéité à insert gonflant 6 par rapport au logement de feu arrière 2. Le système de fixation 7 comprend, outre deux orifices 71, 72 destinés à l'insertion d'un clip de fixation 63 de la plaque d'étanchéité à insert gonflant 6, une fourchette 73 formée à une extrémité longitudinale 74 d'une face latérale 25 du logement de feu arrière 2. L'invention concerne aussi une structure de support et d'étanchéité 10 du logement de feu arrière 2 de véhicule automobile 5, la structure comprenant le logement de feu arrière 2 et la plaque d'étanchéité à insert gonflant 6.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Système de fixation (7) d'une plaque d'étanchéité à insert gonflant (6) sur un logement de feu arrière (2) d'un véhicule automobile (5), le système de fixation (7) comprenant :
- deux orifices (71, 72) formés sur une face d'appui du logement de feu arrière (2), chaque orifice (71, 72) étant destiné à collaborer avec un clip de fixation (63) formé sur la plaque d'étanchéité à insert gonflant (6) ;
- une fourchette (73) formée sur une face latérale (25) du logement de feu arrière (2) afin de maintenir latéralement la plaque d'étanchéité à insert gonflant (6) par rapport au logement de feu arrière (2).

2. Système de fixation (7) selon la revendication précédente, dans lequel une face d'appui (23) du logement de feu arrière (2) comprend une lumière centrale (22) pour l'insertion et/ou la fixation d'un dispositif d'éclairage, les deux orifices (71, 72) étant formées d'un premier côté par rapport à la lumière centrale (22), et la fourchette (73) étant située au niveau d'un deuxième côté par rapport à ladite lumière centrale (22), relativement à une direction sensiblement parallèle à la face latérale (25) du logement de feu arrière (2).

3. Système de fixation (7) selon la revendication précédente, dans lequel la face latérale (25) du logement de feu arrière (2) sur laquelle est formée la fourchette (73) s'étend de manière sensiblement perpendiculaire par rapport à la face d'appui (23) du logement de feu arrière (2).

4. Système de fixation (7) selon l'une quelconque des revendications 2 ou 3, dans lequel la fourchette (73) est située à une extrémité longitudinale (74) de la face latérale (25) du logement de feu arrière (2).

5. Système de fixation (7) selon la revendication précédente, dans lequel la fourchette (73) comprend une encoche (731) qui s'étend depuis un bord libre (251) de la face latérale (25) et en direction du logement de feu arrière (2), ladite encoche (731) étant délimitée par un ergot (75) de positionnement de la plaque d'étanchéité à insert gonflant (6), ledit ergot (75) formant l'extrémité longitudinale (74) de la face latérale (25).

6. Système de fixation (7) selon la revendication précédente, dans lequel l'ergot (75) comprend :
- un premier bord rectiligne (751) formant l'encoche (731) ; et
- un deuxième bord (752) formant un cran (76) du côté de l'extrémité longitudinale (74) de la face latérale (25) afin de maintenir en position la plaque d'étanchéité à insert gonflant (6) par rapport au logement de feu arrière (2).

7. Structure de support et d'étanchéité (10) d'un logement de feu arrière (2) de véhicule automobile (5), la structure (10) comprenant :
- une pièce formant côté d'habitacle d'aile arrière ;
- une pièce de fermeture inférieure d'aile arrière ;
- un logement de feu arrière (2) fixé simultanément sur la pièce formant côté d'habitacle et sur la pièce de fermeture ;
- une plaque d'étanchéité à insert gonflant (6) configurée pour cloisonner un interstice formé entre le logement de feu arrière (2) d'une part et, d'autre part, la pièce formant côté d'habitacle et la pièce de fermeture, la plaque d'étanchéité à insert gonflant (6) étant fixée solidairement au logement de feu arrière (2) par un système de fixation (7) selon l'une quelconque des revendications précédentes.

8. Structure (10) selon la revendication précédente, dans laquelle la plaque d'étanchéité à insert gonflant (6) comprend une rainure (66) dans laquelle la fourchette (73) du système de fixation (7) est engagée.

9. Structure (10) selon l'une quelconque des revendications 7 ou 8, dans laquelle la plaque d'étanchéité à insert gonflant (6) comprend une bride (67) de maintien en position configurée pour collaborer avec l'ergot (75) de la fourchette (73) du système de fixation (7).

## Patentansprüche

1. Befestigungssystem (7) für eine aufblasbare Einsatzdichtungsplatte (6) auf einem Rücklichtgehäuse (2) eines Kraftfahrzeugs (5), wobei das Befestigungssys tem (7) umfasst:
- zwei Öffnungen (71, 72), die auf einer Auflagefläche des Rückwärtsumgehäuses (2) ausgebildet sind, wobei jede Öffnung (71, 72) dazu bestimmt ist, mit einer Befestigu ngsklammer (63) auf der Aufblaseinsatzdichtplatte (6) zusammenzuwirken;
- eine an einer Seitenfläche (25) der Rückwärtaufnahme (2) ausgebildete Gabel (73) zum seitlichen Halten der Aufblaseinsatzdichtplatte (6) gegenüber der Rückwärtsumg ebung (2).

2. Befestigungssystem (7) nach dem vorhergehenden Anspruch, bei dem eine Anlagefläche (23) des Rücklichtgehäuses (2) ein zentrales Lumen (22) zum Einf ühren und/oder Befestigen einer Beleuchtungseinrichtung umfasst, wobei die beiden Öffnungen (71, 72) auf einer Seite in Bezug auf das zentrale Lumen (22) und die Ga bei (77) ausgebildet sind 3) auf einer zweiten Seite relativ zu dem Mittellicht (22) in ei ner Richtung angeordnet ist, die im Wesentlichen parallel zur Seitenfläche (25) des H ecklagers (2) verläuft.

3. Befestigungssystem (7) nach dem vorhergehenden Anspruch, wobei di e Seitenfläche (25) des Rücklichtgehäuses (2), auf der die Gabel (73) ausgebildet ist, sich im Wesentlichen senkrecht zur Auflagefläche (23) des Rücklichtgehäuses (2) er streckt.

4. Befestigungssystem (7) nach einem der Ansprüche 2 oder 3, bei dem di e Gabel (73) an einem Längsende (74) der Seitenfläche (25) des Rücklichtgehäuses (2) angeordnet ist.

5. Befestigungssystem (7) nach dem vorhergehenden Anspruch, wobei di e Gabel (73) eine Kerbe (731) aufweist, die sich von einem freien Rand (251) der Sei tenfläche (25) in Richtung auf das hintere Brandgehäuse (2) erstreckt, wobei die Ker be (731) durch einen Stift (75) zur Positionierung der Platte begrenzt ist Abdichtung mit aufblasbarem Einsatz (6), wobei die Nase (75) das Längsende (74) der Seitenfläc he (25) bildet.

6. Befestigungssystem (7) nach dem vorhergehenden Anspruch, wobei de r Vorsprung (75) umfasst:
- eine erste gerade Kante (751), die die Kerbe (731) bildet; und
- ein zweiter Rand (752), der auf der Seite des Längsendes (74) der Seitenfläche (25 ) eine Raste (76) bildet, um die aufblasbare Einsatzdichtungsplatte (6) relativ zur Rüc kwärtsstrecke (2) in Position zu halten.

7. Halterungs- und Dichtungsstruktur (10) eines Rücklichtgehäuses (2) ein es Kraftfahrzeugs (5), wobei die Struktur (10) umfasst:
- ein Teil, das die Seite des hinteren Flügelraums bildet;
- einem unteren Heckflügelverschluss;
- eine Rücklichtaufnahme (2), die gleichzeitig am Innenraumteil und am Abschlussteil befestigt ist;
- eine Abdichtplatte (6) mit aufblasbarem Einsatz, die zum Abtrennen eines Spaltes z wischen der Rücklichtaufnahme (2) einerseits und dem Fahrgastraumteil und dem Sc hließteil andererseits ausgebildet ist, wobei die Abdichtplatte (6) mit aufblasbarem Ei nsatz durch eine Befestigungseinrichtung (7) nach einem der vorhergehenden Anspr üche fest mit der Rücklichtaufnahme (2) verbunden ist.

8. Struktur (10) nach dem vorhergehenden Anspruch, bei der die Lufteinsa tzdichtungsplatte (6) eine Nut (66) aufweist, in die die Gabel (73) des Befestigungssy stems (7) eingreift.

9. Struktur (10) nach einem der Ansprüche 7 oder 8, bei der die Lufteinsat zdichtungsplatte (6) einen Halteflansch (67) aufweist, der so konfiguriert ist, dass er mit dem Vorsprung (75) der Gabel (73) des Befestigungssystems (7) zusammenwirkt

## Claims

1. Fixing system (7) of an inflated insert seal (6) on a rear light unit (2) of a mo tor vehicle (5), the fixing system (7) comprising:
- two orifices (71, 72) formed on a supporting face of the rear light unit (2), each apert ure (71, 72) intended to collaborate with a mounting clip (63) formed on the inflating i nsert seal plate (6);
- a fork (73) formed on a side face (25) of the rear light unit (2) to maintain the insert-inflating seal plate (6) laterally in relation to the rear light unit (2).

2. Fixing system (7) in accordance with the previous claim, in which a supporti ng face (23) of the rear light unit (2) includes a central light (22) for the insertion and/ or attachment of a lighting device, the two orifices (71, 72) being formed on the first si de of the rear light unit (22), and the fork (7) 3) being located on a second side of the rear light (22), relative to a direction substantially parallel to the lateral face (25) of the rear light housing (2).

3. Fixing system (7) according to the previous claim, in which the lateral face ( 25) of the rear light unit (2) on which the fork (73) is formed extends substantially per pendicular to the supporting face (23) of the rear light unit (2).

4. Fixing system (7) according to any of Claims 2 or 3, in which the range (73) is located at a longitudinal end (74) of the lateral face (25) of the rear light unit (2).

5. Fixing system (7) according to the previous claim, in which the range (73) in cludes a notch (731) extending from a free edge (251) of the lateral face (25) and tow ards the rear light housing (2), the notch (731) being delimited by a ergot (75) of the p late positioning Inflating insert seal (6), the said ergot (75) forming the longitudinal en d (74) of the lateral face (25).

6. Fixing system (7) according to the previous claim, in which the ergot (75) in cludes:
- a first straight edge (751) forming the notch (731); and
- a second edge (752) forming a notch (76) on the side of the longitudinal end (74) of the lateral face (25) in order to keep the insert-inflating seal plate (6) in position with respect to the rear light housing (2).

7. Support and waterproofing structure (10) of a rear light unit (2) of a motor v ehicle (5), the structure (10) comprising:
- a piece forming the rear wing compartment side;
- a rear wing bottom fastener;
- a rear light unit (2) fixed simultaneously on the piece forming the side of the passen ger compartment and on the closing part;
- an inflating insert seal plate (6) configured to partition a gap formed between the rea r light unit (2) and the side of the passenger compartment and the closing part, the inf lating insert seal plate (6) being securely attached to the rear light unit (2) by a fasteni ng system (7) in accordance with any of the preceding claims.

8. Structure (10) according to the previous claim, in which the inflating insert s eal plate (6) includes a groove (66) in which the band (73) of the attachment system ( 7) is engaged.

9. Structure (10) according to any of Claims 7 or 8, in which the inflating insert seal plate (6) includes a retaining flange (67) configured to work with the ergot (75) of the attachment system (73).
